# EUROPEAN PATENT APPLICATION

(11) **EP 2 127 548 A1**
(43) Date of publication of application: **02.12.2009**
(21) Application number: 08425381.4
(22) Date of filing: 27.05.2008
(51) Int. Cl.: A41D 31/02, A47G 9/02

(54) **Threadless quilt**

(71) Applicant: Alix 161 S.R.L., I-56022 Castelfranco di Sotto (IT)
(72) Inventor: de Resi, Giovanni, 56122 Pisa (IT)
(74) Representative: Gervasi, Gemma

(57) **Abstract**

The present invention relates to quilts and multilayer materials characterized by a quilted effect obtained by means of threadless stitching.

## Description

### FIELD OF THE INVENTION

The present invention relates to multilayer materials with a quilted effect obtained by means of a method of threadless stitching.

### STATE OF THE ART

It is known that to make a quilt, at least two layers of different material are set on top of one another and these layers are made to adhere to one another by means of stitching using thread. Said method moreover enables shape to be given to the wadded fabric, i.e., creation of the typical quilted effect, characterized by areas provided with a pronounced crowning delimited by perimetral stitching.

Said at least two layers generally comprise an internal filling material, frequently characterized by good properties of thermal insulation and an external coating material.

Said internal filling material has the function of creating thickness and insulation with the outside, can be synthetic or natural and has a variable thickness and can in turn be constituted by one or more layers. Examples of materials of this type can be feathers, sponge-rubber, and wadding.

Said external material can be any fabric (for example, cotton, linen, wool, silk, jersey, synthetic fabric), non-woven fabric and any type of light and soft leather, with a function of coating, as well as an ornamental function.

For the industrial production of a quilt, said at least two layers are set on top of one another and then stitched with thread using suitable machinery (such as, for example, a quilting machine or a lockstitch machine). Where the stitching passes, said at least two layers are both perforated and are reduced in thickness with the consequence of creating the quilted effect described previously.

The aforesaid method has as result the obtaining of a finished product in which the thread used for the stitching remains visible. The perforation of the external layer due to the stitching, however, alters the degree of softness, homogeneity, and resistance to external agents (such as, for example, water or other substances). In the case of eiderdowns, for example, the perforation of the external layer can favour exit and loss of feathers with negative repercussions on the quality and on the duration of the article.

The purpose of the present invention is hence to make available multilayer materials, characterized by the quilted effect, typical of quilts, but without threads and stitches being used that normally bestow said effect and with the advantage that the external material, in so far as it is not perforated, will maintain its characteristics of resistance, softness and homogeneity unaltered. Said multilayer materials, with a quilted effect, are obtained by means of a new method that does not envisage the use of stitching.

### SUMMARY OF THE INVENTION

The present invention relates to new multilayer materials characterized by a quilted effect, in particular quilts, obtained by means of a new process for their industrial production that does not envisage the step of stitching.

### BRIEF DESCRIPTION OF THE DRAWINGS

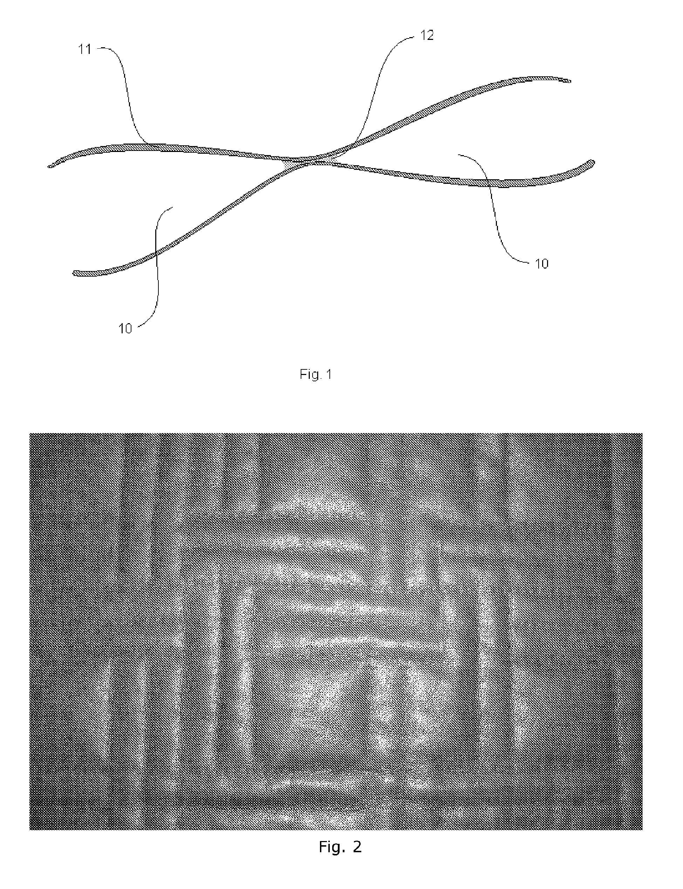

Figure 1 is a cross-sectional view of the multilayer material according to the present invention.
Figure 2 illustrates an image of an example of product made using the multilayer material according to the present invention.

### DETAILED DESCRIPTION OF THE INVENTION

According to the present invention, the multilayer material with a quilted effect is made up of at least two layers: an internal filling material 10, preferably characterized by good properties of thermal insulation, and an external coating material 11, **characterized in that** it has not undergone perforations during the production process.

Said internal filling material 10 is any natural or synthetic material, either single-layer or multilayer, **characterized in that** it has a quilted effect obtained by means of the traditional method of stitching using thread. It can be made of rubber, sponge-rubber, wadding or else by means of a quilt or an eiderdown.

Said external coating material 11 can be made of any fabric (cotton, silk, wool, synthetic fibre), of a non-woven fabric, or else again of leather, preferably soft and with a thickness of from 0.3 to 0.4 mm and preferably resistant to temperatures higher than 100°C.

Between these two layers there is then set an appropriate adhesive means 12, for example spread on one of said two layers, which, following upon appropriate pressing and appropriate thermal treatment, acts so as to bind said at least two layers to form the multilayer material according to the present invention.

Said adhesive means can comprise glue, for example with a base of polyvinyl chloride (PVC) or polyurethane (PU) or also comprising paper spread with PU.

A further aspect of the present invention relates to the process for the industrial production of said multilayer materials, in which said external coating material adheres uniformly to at least one of the two surfaces of said internal filling material by means of the use of a method that does not envisage stitching or use of thread.

Preferably said method comprises the steps of:
a) superposition of the layers of which the material is to be made;
b) interposition between the layers of an adhesive means;
c) pressing; and
d) thermal treatment.

Said adhesive can be obtained using glue, for example with a base of polyvinyl chloride (PVC) or polyurethane (PU) or also comprising paper spread with PU.

Said pressing is preferably performed for a duration of 20 - 40 s, preferably 30 s, at a pressure of 3 - 5 atm and can be carried out, for example with a pneumatic press or else with a roller press.

Said thermal treatment, which enables the adhesive to bond the layers together, is preferably carried out at a temperature of 100 - 140°C, preferably 120°C.

The multilayer material obtained according to the present invention can be used for the production of garments, furnishings for dwellings or means of transport, or coverlets.

The following example of use of the present invention, provided purely by way of non-limiting illustration of the present invention, regards the production of a quilt without stitches. After the preventive production of a quilt by using a traditional method, laid thereon, on both sides or on one side only, is a layer of leather, which has been appropriately reduced to a thickness of approximately 0.3 mm and on the internal face of which a layer of glue has been deposited.

Once the quilt and the layer of leather treated as explained previously have been brought together, they are subjected to a press, for example of a pneumatic type or a roller press, for approximately 30 s, designed to exert a pressure of 3 - 5 atm. After this first step, the material that has come from the treatment of the press is heated to a temperature of approximately 120° C so as to enable the glue to bond the layer of leather to the quilt.

## Claims

1. A multilayer material with a quilted effect, made up of at least two layers comprising an internal filling material and an external coating material, **characterized in that** said external coating material has not undergone perforations.

2. The multilayer material according to Claim 1, **characterized in that** set between said two layers is an appropriate adhesive means designed, following upon appropriate pressing and appropriate thermal treatment, to bind said at least two layers together.

3. The multilayer material according to Claims 1 and 2,
**characterized in that** said internal filling material is a material **characterized by** a quilted effect obtained by means of the traditional method of stitching using thread.

4. The multilayer material according to Claim 3, **characterized in that** said internal filling material is a quilt or an eiderdown.

5. The multilayer material according to Claims 1 to 4,
**characterized in that** said external coating material is chosen in the group comprising fabrics, such as cotton, silk, wool, synthetic fibre, non-woven fabrics, and leather.

6. The multilayer material according to Claims 1 to 5,
**characterized in that** said external coating material is soft and has a thickness comprised between 0.3 mm and 0.4 mm.

7. The multilayer material according to Claims 1 to 6, in which said external coating material is resistant to temperatures higher than 100°C.

8. A method for the production of multilayer materials, **characterized in that** it comprises the following steps:
a) superposition of the layers of which the material is to be made;
b) interposition between the layers of an adhesive means;
c) pressing; and
d) thermal treatment.

9. The method according to Claim 8, **characterized in that** said adhesive means comprises glue.

10. The method according to Claims 8 and 9, in which the pressing as per step c) is performed for a duration of 20 - 40 s at a pressure of 3 - 5 atm.

11. The method according to Claims 8 to 10, in which the pressing as per step c) is performed by means of a press of a pneumatic type or else of a roller type.

12. The method according to Claims 8 to 11, in which said thermal treatment as per step d) is carried out at a temperature of 100°C-140°C.

13. Use of the multilayer material according to Claims 1 to 7 obtained according to the method referred to in Claims 8 to 12, for the production of garments, furnishings for dwellings or means of transport, coverlets.
